# EUROPEAN PATENT SPECIFICATION

(11) **EP 2 615 264 B1**
(45) Date of publication and mention of the grant of the patent: **27.07.2016**
(21) Application number: 11823485.5
(22) Date of filing: 02.09.2011
(51) Int. Cl.: F01K 23/10, B63H 21/14, B63J 3/02, F02G 5/02

(54) **POWER PLANT EQUIPMENT, SHIP INCLUDING THE SAME, AND METHOD FOR OPERATING POWER PLANT EQUIPMENT**
KRAFTWERKANLAGE, DAMIT AUSGESTATTETES SCHIFF UND VERFAHREN ZUM BETREIBEN EINER KRAFTWERKANLAGE
ENSEMBLE CENTRALE ÉLECTRIQUE, NAVIRE ÉQUIPÉ DE CET ENSEMBLE ET PROCÉDÉ D'EXPLOITATION DE L'ENSEMBLE DE CENTRALE ÉLECTRIQUE

(30) Priority: 06.09.2010 JP 2010199364
(43) Date of publication of application: 17.07.2013
(73) Proprietor: Mitsubishi Heavy Industries, Ltd., Tokyo 108-8215 (JP)
(72) Inventor: ICHIKI, Yoshihiro, Tokyo 108-8215 (JP)
(74) Representative: Hoffmann Eitle
(86) International application number: PCT/JP2011/070000
(87) International publication number: WO 2012/033010

(56) References cited:
- DE-A1-102006 043 835
- DE-A1-102007 050 259
- JP-A- 57 049 005
- JP-A- 60 212 621
- JP-A- 61 232 319
- JP-A- S61 232 319
- JP-U- S6 298 704
- JP-U- 56 089 503
- JP-U- 61 179 304
- JP-U- 62 098 704
- JP-U- 63 082 020

## Description

### {Technical Field}

The present invention relates to power plant equipment, ships including such power plant equipment, and methods for operating power plant equipment.

### {Background Art}

Among known exhaust heat recovery systems for diesel engines are exhaust gas economizers, which produce steam using exhaust gas from diesel engines. An example of a known exhaust heat recovery system is given in JP-56298704U.

In addition, as disclosed in PTL 1 below, there is a known system using a bled-gas bypass pipe that bleeds a portion of effective exhaust gas having high energy before passage through a supercharger for a diesel engine and that mixes it with exhaust gas that has passed through the supercharger upstream of an exhaust gas economizer. The system disclosed in this literature is configured as exhaust-gas heating equipment for the exhaust gas economizer and controls a control valve in the bled-gas bypass pipe so that the pressure of the steam at the outlet of a steam separator for the exhaust gas economizer reaches a predetermined pressure.

Also considered is a system that generates electricity by driving a steam turbine using superheated steam produced by an exhaust gas economizer to further improve the effectiveness of exhaust heat recovery.

### {Citation List}

### {Patent Literature}

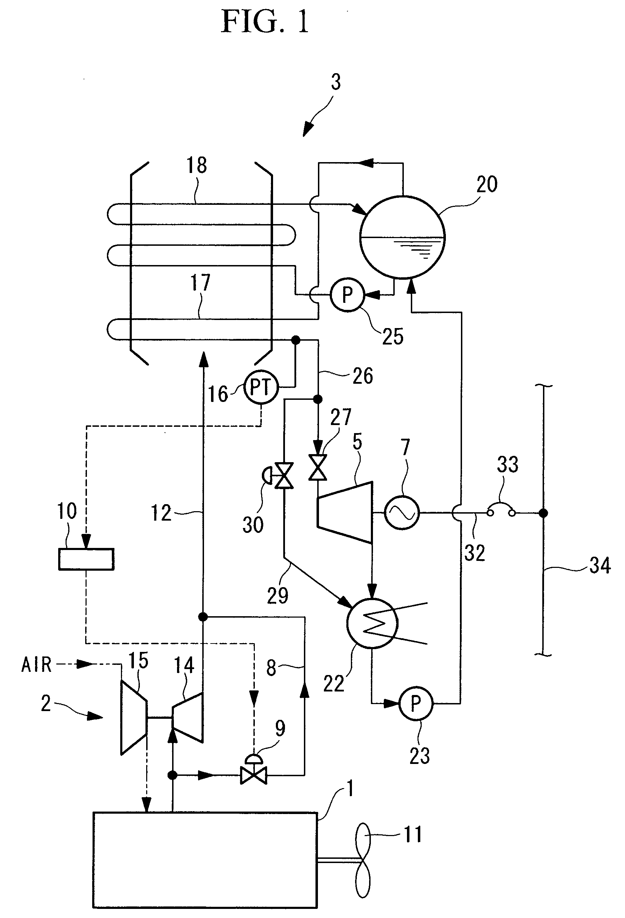

{PTL 1}
Japanese Unexamined Patent Application, Publication No. SHO-61-232319 (Figs. 1 and 3)

### {Summary of Invention}

### {Technical Problem}

However, it is understood from PTL 1, but not explicitly stated, that the system disclosed therein, which produces saturated steam using the exhaust gas economizer, is intended to use the steam as utility steam for peripheral equipment or as a heat source for heating heavy oil, which is a fuel for diesel engines. Thus, it lacks the knowledge of how to control the bled-gas bypass valve when producing superheated steam using the exhaust gas economizer to generate electricity using the steam turbine.

In addition, the system in PTL 1 is configured as exhaust-gas heating equipment and is intended to control the pressure of the steam at the outlet of the steam separator to a predetermined pressure.

However, in a system that generates electricity by driving a steam turbine using superheated steam produced by an exhaust gas economizer, the required amount of superheated steam fluctuates depending on the power demand of a system to which the resulting power is supplied. That is, controlling the steam pressure to a predetermined level, as in PTL 1, cannot meet the fluctuating system power demand.

For example, control is possible such that, when electricity is generated, the bled-gas bypass valve is fully opened to increase the amount and temperature of the steam produced by the exhaust gas economizer, and when no electricity is generated, the bled-gas bypass valve is fully closed because the amount and temperature of the steam need not be increased. However, if the amount of electricity generated by the steam turbine exceeds the system power demand while the bled-gas bypass valve is fully open, the pressure of the steam produced by the exhaust gas economizer rises, thus producing excess steam. In this case, in order to avoid an excessive rise in pressure, the excess steam needs to be dumped (wasted) into the condenser by opening a steam dump valve so that the steam bypasses the steam turbine. This means that the steam produced by exhaust heat recovery in the exhaust gas economizer is wasted, which goes against effective energy utilization. In addition, excessively bleeding the exhaust gas upstream of the supercharger decreases the work of the supercharger and, consequently, decreases the amount of compressed air from the supercharger, thus decreasing the fuel economy of diesel engines.

In view of the foregoing, the present invention provides power plant equipment that is highly responsive to fluctuations in system power demand and that is capable of optimizing the fuel economy of diesel engines, a ship including such power plant equipment, and a method for operating such power plant equipment.

### {Solution to Problem}

To solve the foregoing problem, power plant equipment, a ship including the power plant equipment, and a method for operating power plant equipment of the present invention employ the following solutions.

Power plant equipment according to a first aspect of the present invention is disclosed in independent claim 1.

The pressure of the superheated steam supplied from the steam-producing apparatus to the steam turbine is a floating pressure depending on the amount of steam consumed by the steam turbine. The amount of steam consumed by the steam turbine in turn depends on the amount of electricity generated by the generator driven by the steam turbine, i.e., the system power demand. Thus, the pressure of the superheated steam supplied from the steam-producing apparatus to the steam turbine depends on the system power demand. Accordingly, the present invention adjusts the degree of opening of the bled-gas bypass valve depending on the pressure of the superheated steam to adjust the amount of exhaust gas bypassing the supercharger through the bled-gas bypass path depending on the system power demand. This allows the steam-producing apparatus to produce an amount of superheated steam that depends on the system power demand, which avoids production of excess superheated steam. Thus, unnecessary bled-gas bypassing can be eliminated, thereby optimizing the fuel economy of the diesel engine.

In addition, because the basis of adjustment of the degree of opening of the bled-gas bypass valve used in the present invention is the pressure of the superheated steam, i.e., the pressure of the steam immediately before being supplied to the steam turbine, rather than the pressure of the saturated steam from the steam-producing apparatus, the responsiveness to the system power demand can be improved.

In the power plant equipment according to the first aspect of the present invention, the controller may be configured to adjust the degree of opening of the bled-gas bypass valve toward a closed position when the pressure of the superheated steam tends to increase from a first predetermined level and to adjust the degree of opening of the bled-gas bypass valve toward an open position when the pressure of the superheated steam tends to decrease from a second predetermined level.

When the system power demand is relatively small, the steam turbine consumes a smaller amount of steam, and accordingly the steam-producing apparatus tends to produce excess superheated steam. In this case, because the pressure of the superheated steam tends to increase, the degree of opening of the bled-gas bypass valve is adjusted toward the closed position to decrease the excess superheated steam.

Conversely, when the system power demand is relatively large, the steam turbine consumes a larger amount of steam, and accordingly the steam-producing apparatus tends to produce insufficient superheated steam. In this case, because the pressure of the superheated steam tends to decrease, the degree of opening of the bled-gas bypass valve is adjusted toward the open position to increase the superheated steam.

In the power plant equipment according to the first aspect of the present invention, the controller may be configured to open a steam dump valve to allow the superheated steam to bypass the steam turbine into a condenser when the bled-gas bypass valve is fully closed and the pressure of the superheated steam exceeds a third predetermined level.

If the system power demand is extremely small, the increased excess steam may result in an excessive rise in the pressure of the superheated steam even if the bled-gas bypass valve is fully closed. In this case, the steam dump valve is opened to allow the superheated steam to bypass the steam turbine into the condenser. This avoids an excessive rise in steam pressure, thus protecting various devices.

In the power plant equipment according to the first aspect of the present invention, the diesel engine may be a main diesel engine that drives a propeller for propelling a ship, and the generator may be configured to supply the electrical power to an onboard system.

When a ship sails at constant speed in the ocean, the main diesel engine is maintained at a substantially constant output. The power consumed by the onboard system, however, fluctuates depending on the onboard demand. Because the present invention adjusts the degree of opening of the bled-gas bypass valve depending on the pressure of the superheated steam, an appropriate amount of steam produced can be maintained irrespective of fluctuations in the power demand of the onboard system when the main diesel engine is maintained at a substantially constant output, thus optimizing the fuel economy of the main diesel engine.

A second aspect of the present invention is a ship including the power plant equipment described above.

With the power plant equipment described above, a ship with high fuel economy can be provided.

The pressure of the superheated steam supplied from the steam-producing apparatus to the steam turbine is a floating pressure depending on the amount of steam consumed by the steam turbine. The amount of steam consumed by the steam turbine in turn depends on the amount of electricity generated by the generator driven by the steam turbine, i.e., the system power demand. Thus, the pressure of the superheated steam supplied from the steam-producing apparatus to the steam turbine depends on the system power demand. Accordingly, the present invention adjusts the degree of opening of the bled-gas bypass valve depending on the pressure of the superheated steam to adjust the amount of exhaust gas bypassing the supercharger through the bled-gas bypass path depending on the system power demand. This allows the steam-producing apparatus to produce an amount of superheated steam that depends on the system power demand, which avoids production of excess superheated steam. Thus, unnecessary bled-gas bypassing can be eliminated, thereby optimizing the fuel economy of the diesel engine.

In addition, because the basis of adjustment of the degree of opening of the bled-gas bypass valve used in the present invention is the pressure of the superheated steam, i.e., the pressure of the steam immediately before being supplied to the steam turbine, rather than the pressure of the saturated steam from the steam-producing apparatus, the responsiveness to the system power demand can be improved.

### {Advantageous Effects of Invention}

Because the degree of opening of the bled-gas bypass valve is adjusted depending on the pressure of the superheated steam, unnecessary bled-gas bypassing can be eliminated, thereby optimizing the fuel economy of the diesel engine.

In addition, because the basis of adjustment of the degree of opening of the bled-gas bypass valve is the pressure of the superheated steam, the responsiveness to the system power demand can be improved.

### {Brief Description of Drawings}

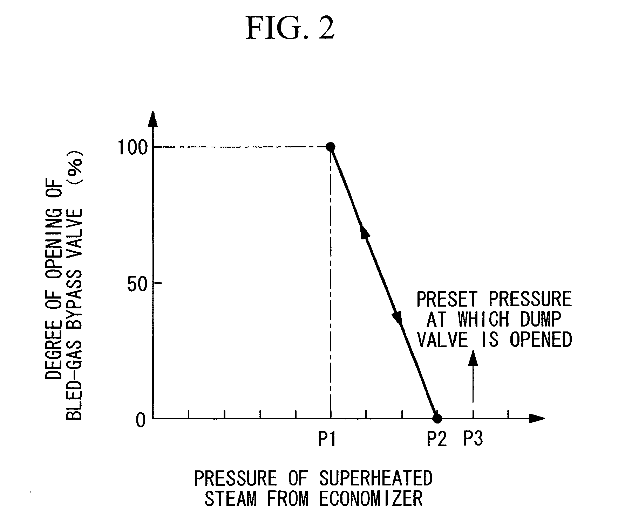

{Fig. 1} Fig. 1 is a schematic view showing power plant equipment of the present invention.
{Fig. 2} Fig. 2 is a graph showing the operation of a bled-gas bypass valve in Fig. 1.

### {Description of Embodiments}

An embodiment of power plant equipment, a ship including the power plant equipment, and a method for operating the power plant equipment of the present invention will be described below with reference to the drawings.

As shown in Fig. 1, power plant equipment installed in a ship includes a main diesel engine (diesel engine) 1, an exhaust gas economizer (steam-producing apparatus) 3 that produces steam using hot exhaust gas discharged by the main diesel engine 1, a steam turbine 5 that is driven by the steam produced by the exhaust gas economizer 3, and a generator 7 that is driven by the steam turbine 5.

The main diesel engine 1 drives a propeller 11 for propelling the ship. The compressed air supplied to the main diesel engine 1 comes from a supercharger 2 that is driven by the exhaust gas from the main diesel engine 1.

The supercharger 2 includes a turbine 14 and a compressor 15 that are coaxially aligned. The turbine 14 is rotationally driven by the exhaust gas discharged from the main diesel engine 1. As the turbine 14 is driven, the compressor 15, which is coaxially aligned therewith, is rotated to compress air.

The downstream side of the turbine 14 is connected to the exhaust gas economizer 3, described later, via an exhaust gas pipe 12.

A bled-gas bypass pipe (bled-gas bypass path) 8 is provided, through which a portion of the exhaust gas from the main diesel engine 1 is bled off and bypasses the supercharger 2. The bled-gas bypass pipe 8 has the upstream end thereof connected to the upstream side of the turbine 14 of the supercharger 2 and the downstream end thereof connected to the exhaust gas pipe 12 downstream of the turbine 14 of the supercharger 2. The bled-gas bypass pipe 8 has a bled-gas bypass valve 9. The degree of opening of the bled-gas bypass valve 9 is controlled by a controller 10. Specifically, the degree of opening of the bled-gas bypass valve 9 is controlled depending on the output of a pressure sensor 16 that detects the pressure of superheated steam supplied from the exhaust gas economizer 3 to the steam turbine 5.

The exhaust gas economizer 3 has a superheater 17 and an evaporator 18 in the flue thereof. The superheater 17 and the evaporator 18 are heat transfer pipes installed in parallel in the exhaust gas economizer 3 in the above order from bottom to top (from the downstream side to the upstream side of the flow of exhaust gas). Hot exhaust gas flows through the flue of the exhaust gas economizer 3 and is released into the air through a funnel (not shown) connected to the downstream side thereof. The superheater 17 is supplied with saturated steam from the top of a steam separator 20. The evaporator 18 is supplied with water from the bottom of the steam separator 20.

The steam separator 20 contains water and steam, which are separated vertically. The steam separator 20 is supplied with water from a condenser 22 through a condensate pump 23. The water is directed from the steam separator 20 into the evaporator 18 by a boiler water circulation pump 25. Wet steam containing moisture from the evaporator 18 is directed into the steam separator 20, which separates it into water and steam. The separated saturated steam is directed into the superheater 17, which produces superheated steam. The superheated steam produced by the superheater 17 is directed into the steam turbine 5 through a superheated-steam supply pipe 26. The superheated-steam supply pipe 26 has the pressure sensor 16, described above. The pressure sensor 16, which detects the superheated steam pressure, may be installed at any position where it can detect the pressure of the superheated steam produced by the exhaust gas economizer 3.

A steam stop valve 27 configured as an on/off valve is disposed upstream of the steam turbine 5. The steam stop valve 27 is fully open when the steam turbine 5 is operating and is fully closed when the steam turbine 5 is not operating.

The steam turbine 5 is rotationally driven by the superheated steam directed through the steam stop valve 27, and the resulting rotational output power is transmitted to the generator 7.

The steam that has done work in the steam turbine 5 is directed into the condenser 22, which condenses the steam into a liquid. The liquid condensate is directed into the steam separator 20 by the condensate pump 23.

A steam dump path 29 is provided between the condenser 22 and the outlet of the superheater 17 of the exhaust gas economizer 3 so as to bypass the steam turbine 5. The steam dump path 29 has a steam dump valve 30 that is controlled so as to be fully open when the superheated steam pressure acquired by the pressure sensor 16 is at or above a predetermined level and to be fully closed when the superheated steam pressure is below the predetermined level.

The generator 7 generates electricity as it is driven by the rotational output power transmitted from the steam turbine 5. The electrical output power of the generator 7 is fed through an output power cable 32 and a breaker 33 to an onboard power system 34.

Next, a method for operating the power plant equipment described above will be described.

When the main diesel engine 1 starts operating, the compressed air compressed by the supercharger 2 is supplied to the main diesel engine 1, which burns it together with fuel (not shown) in the cylinders thereof. The exhaust gas produced by combustion in the main diesel engine 1 is directed through the exhaust gas pipe 12 via the turbine 14 of the supercharger 2 into the exhaust gas economizer 3. As the exhaust gas passes through the exhaust gas economizer 3, the exhaust gas exchanges heat with the superheater 17 and the evaporator 18. The water in the evaporator 18 exchanges heat with the exhaust gas to turn into wet steam. This wet steam is directed into the steam separator 20, which separates water before the steam is directed into the superheater 17 of the exhaust gas economizer 3. The steam in the superheater 17 exchanges heat with the exhaust gas to turn into superheated steam.

The superheated steam is directed into a superheated-steam supply pipe 26. The superheated steam directed into the superheated-steam supply pipe 26 is supplied through the steam stop valve 27 to the steam turbine 5. The steam turbine 5 is rotationally driven by the steam directed thereto, and the resulting rotational output power is transmitted to the generator 7. The generator 7 generates electricity using the rotational output power produced by the steam turbine 5, and the resulting electrical output power is supplied through the output power cable 32 and the breaker 33 to the onboard power system 34.

Next, the operation of the bled-gas bypass valve 9 will be described with reference to Fig. 2.

Upon starting operation, the main diesel engine 1 has not reached a predetermined load, and accordingly the exhaust gas discharged from the main diesel engine 1 has not reached the pressure at which the steam turbine 5 generates electricity; therefore, the bled-gas bypass valve 9 remains fully closed. The bled-gas bypass valve 9 is fully opened when the main diesel engine 1 reaches the predetermined load.

When the bled-gas bypass valve 9 is opened, a portion of the exhaust gas having high energy before passage through the supercharger 2 is bled off, passes through the bled-gas bypass pipe 8, and is mixed with the exhaust gas that has passed through the supercharger 2 upstream of the exhaust gas economizer 3. This allows the amount and temperature of the steam produced by the exhaust gas economizer 3 to be increased.

As shown in Fig. 2, the controller 10 controls the degree of opening of the bled-gas bypass valve 9 when the pressure, acquired by the pressure sensor 16, of the superheated steam from the exhaust gas economizer 3 lies between a first predetermined level P1 and a second predetermined level P2.

When the superheated steam pressure rises beyond the second predetermined level P2, the pressure is sufficient without the assistance of bled-gas bypassing; therefore, the bled-gas bypass valve 9 is fully closed.

When the superheated steam pressure further rises beyond the second predetermined level P2 to a third predetermined level P3, a preset pressure at which the dump valve is opened is reached, which causes the steam dump valve 30 to be fully opened. This allows a portion of the superheated steam from the exhaust gas economizer 3 to flow into the condenser 22, thereby avoiding an excessive rise in superheated steam pressure.

In the power plant equipment of this embodiment, the superheated steam pressure is a floating pressure determined by the balance of the amount of steam produced by the exhaust gas economizer 3 and the amount of steam consumed by the steam turbine 5. Accordingly, the controller 10 adjusts the degree of opening of the bled-gas bypass valve 9 depending on the superheated steam pressure in the following manner.

When the power demand of the onboard system 34 decreases relatively, the steam turbine 5 consumes a smaller amount of steam, and the exhaust gas economizer 3 tends to produce excess superheated steam. That is, when the power demand of the onboard system 34 decreases relatively, it is preferable to decrease the amount of steam produced by the exhaust gas economizer 3 by decreasing the degree of opening of the bled-gas bypass valve 9. Accordingly, when the superheated steam pressure tends to increase, the degree of opening of the bled gas bypass valve 9 is gradually decreased toward the closed position.

Conversely, when the power demand of the onboard system 34 increases relatively, the steam turbine 5 consumes a larger amount of steam, and the exhaust gas economizer 3 tends to produce insufficient superheated steam. That is, when the power demand of the onboard system 34 increases relatively, it is preferable to increase the amount of steam produced by the exhaust gas economizer 3 by increasing the degree of opening of the bled-gas bypass valve 9. Accordingly, when the superheated steam pressure tends to decrease, the degree of opening of the bled-gas bypass valve 9 is gradually increased toward the open position.

As above, the power plant equipment, the ship including the power plant equipment, and the method for operating the power plant equipment of this embodiment provide the following advantages.

The degree of opening of the bled-gas bypass valve 9 is adjusted depending on the pressure of the superheated steam from the exhaust gas economizer 3 to adjust the amount of exhaust gas bypassing the supercharger 2 through the bled-gas bypass pipe 8 depending on the power demand of the onboard system 34. This allows the exhaust gas economizer 3 to produce an amount of superheated steam that depends on the power demand of the onboard system 34, which avoids production of excess superheated steam. Thus, unnecessary bled-gas bypassing can be eliminated, thereby optimizing the fuel economy of the main diesel engine 1.

In addition, because the basis of adjustment of the degree of opening of the bled-gas bypass valve 9 is the pressure of the superheated steam after passage through the superheater 17, i.e., the pressure of the steam immediately before being supplied to the steam turbine 5, rather than the pressure of the saturated steam at the outlet of the steam separator 20, the responsiveness to the power demand of the onboard system 34 can be improved.

Whereas this embodiment illustrates the installation of the power plant equipment in a ship, the present invention is not limited thereto but may be applied to power plant equipment installed on land.

### {Reference Signs List}

- 1: main diesel engine (diesel engine)
- 2: supercharger
- 3: exhaust gas economizer (steam-producing apparatus)
- 5: steam turbine
- 7: generator
- 8: bled-gas bypass pipe (bled-gas bypass path)
- 9: bled-gas bypass valve
- 10: controller
- 16: pressure sensor
- 30: steam dump valve
- 34: onboard system

## Claims

1. Power plant equipment comprising:
a diesel engine (1);
a supercharger (2) that compresses combustion air to be supplied to the diesel engine as the supercharger is driven by exhaust gas from the diesel engine;
a bled-gas bypass path (8) through which a portion of the exhaust gas from the diesel engine bypasses the supercharger;
a bled-gas bypass valve (9) that is disposed in the bled-gas bypass path and that adjusts the amount of bypassing exhaust gas;
a steam-producing apparatus (3) that produces steam by recovering exhaust heat from the exhaust gas that has passed through the supercharger or through the supercharger and the bled-gas bypass path;
a steam turbine (5) that is driven by the steam produced by the steam-producing apparatus;
a generator (7) that generates electricity using a driving force produced by the steam turbine and that supplies the resulting electrical power to a system (34); and
a controller (10) that adjusts the degree of opening of the bled-gas bypass valve depending on the pressure of the superheated steam supplied from the steam-producing apparatus to the steam turbine; and **characterized in that**
the controller brings the bled-gas bypass valve from a fully closed state to a fully opened state when the diesel engine reaches a predetermined load, and thereafter adjusts the degree of opening of the bled-gas bypass valve depending on the pressure of the superheated steam.

2. The power plant equipment according to Claim 1, wherein the controller adjusts the degree of opening of the bled-gas bypass valve toward a closed position when the pressure of the superheated steam tends to increase from a first predetermined level and adjusts the degree of opening of the bled-gas bypass valve toward an open position when the pressure of the superheated steam tends to decrease from a second
predetermined level.

3. The power plant equipment according to Claim 1 or 2, wherein the controller opens a steam dump valve (30) to allow the superheated steam to bypass the steam turbine into a condenser (22) when the bled-gas bypass valve is fully closed and the pressure of the superheated steam exceeds a third
predetermined level.

4. The power plant equipment according to one of Claims 1 to 3, wherein
the diesel engine is a main diesel engine that drives a propeller (11) for propelling a ship; and
the generator supplies the electrical power to an onboard system.

5. A ship comprising the power plant equipment according to Claim 4.

6. A method for operating power plant equipment provided with a diesel engine (1);
a supercharge (2) that compresses combustion air to be supplied to the diesel engine as the supercharger is driven by exhaust gas from the diesel engine;
a bled-gas bypass path (8) through which a portion of the exhaust gas from the diesel engine bypasses the supercharger;
a bled-gas bypass valve (9) that is disposed in the bled-gas bypass path and that adjusts the amount of bypassing exhaust gas
a steam-producing apparatus (3) that produces steam by recovering exhaust heat from the exhaust gas that has passed through the supercharger or through the supercharger and the bled-gas bypass path;
a steam turbine (5) that is driven by the steam produced by the steam-producing apparatus; and
a generator (7) that generates electricity using a driving force produced by the steam turbine and that supplies the resulting electrical power to a system (34),
the method comprising:
adjusting the degree of opening of the bled-gas bypass valve depending on the pressure of the superheated steam supplied from the steam-producing apparatus to the steam turbine; and **characterized in that**
the controller (10) brings the bled-gas bypass valve from a fully closed state to a fully opened state when the diesel engine reaches a predetermined load, and thereafter adjusts the degree of opening of the bled-gas bypass valve depending on the pressure of the superheated steam.

## Patentansprüche

1. Eine Kraftwerksausrüstung, umfassend:
einen Dieselmotor (1);
einen Kompressor (2), welcher eine an den Dieselmotor zuzuführende Verbrennungsluft komprimiert, wenn der Kompressor durch ein Abgas von dem Dieselmotor betrieben wird;
einen Entlüftungsgas-Bypasskanal (8), durch welchen ein Teil des Abgases von dem Dieselmotor um den Kompressor geleitet ist;
ein Entlüftungsgas-Bypassventil (9), welches in dem Entlüftungsgas-Bypasskanal angeordnet ist und welches die Menge an umgeleitetem Abgas einstellt;
eine Dampferzeugungsvorrichtung (3), welche Dampf durch Wiedergewinnen von Abgaswärme aus dem Abgas erzeugt, welches durch den Kompressor oder durch den Kompressor und den Entlüftungsgas-Bypasskanal geleitet ist;
eine Dampfturbine (5), welche durch den von der Dampferzeugungsvorrichtung erzeugten Dampf betrieben ist;
einen Generator (7), welcher Elektrizität unter Verwendung einer durch die Dampfturbine erzeugten Antriebskraft erzeugt und welcher die resultierende elektrische Energie an ein System (34) zuführt; und
eine Steuereinheit (10), welche den Grad einer Öffnung des Entlüftungsgas-Bypassventils in Abhängigkeit von dem Druck des überhitzten Dampfs einstellt, welcher von der Dampferzeugungsvorrichtung an die Dampfturbine zugeführt ist;
und **dadurch gekennzeichnet, dass**
die Steuereinheit das Entlüftungsgas-Bypassventil von einem vollständig geschlossenen Zustand in einen vollständig geöffneten Zustand bringt, wenn der Dieselmotor eine vorbestimmte Last erreicht, und danach den Grad einer Öffnung des Entlüftungsgas-Bypassventils in Abhängigkeit von dem Druck des überhitzten Dampfs einstellt.

2. Kraftwerksausrüstung gemäß Anspruch 1, wobei die Steuereinheit den Grad einer Öffnung des Entlüftungsgas-Bypassventils in Richtung einer geschlossenen Position einstellt, wenn der Druck des überhitzten Dampfs dazu neigt sich von einem ersten vorbestimmten Niveau an zu erhöhen, und den Grad einer Öffnung des Entlüftungsgas-Bypassventils in eine Richtung einer geöffneten Position einstellt, wenn der Druck des überhitzten Dampfs dazu neigt sich von einem zweiten vorbestimmten Niveau zu erniedrigen.

3. Kraftwerksausrüstung gemäß Anspruch 1 oder 2, wobei die Steuereinheit ein Dampfablassventil (30) öffnet zum Ermöglichen, dass der überhitzte Dampf um die Dampfturbine in einen Kondensor (22) geleitet wird, wenn das Entlüftungsgas-Bypassventil vollständig geschlossen ist und der Druck des überhitzten Dampfs ein drittes vorbestimmtes Niveau überschreitet.

4. Kraftwerksausrüstung gemäß einem der Ansprüche 1 bis 3, wobei
der Dieselmotor ein Hauptdieselmotor ist, welcher einen Propeller (11) zum Antreiben eines Schiffs antreibt; und der Generator die elektrische Energie an ein Boardsystem zuführt.

5. Ein Schiff umfassend die Kraftwerksausrüstung gemäß Anspruch 4.

6. Ein Verfahren zum Betreiben einer Kraftwerksausrüstung, versehen mit einem Dieselmotor (1);
einem Kompressor (2), welcher eine an den Dieselmotor zuzuführende Verbrennungsluft komprimiert, wenn der Kompressor durch ein Abgas von dem Dieselmotor betrieben wird;
einem Entlüftungsgas-Bypasskanal (8), durch welchen ein Teil des Abgases von dem Dieselmotor um den Kompressor geleitet wird;
einem Entlüftungsgas-Bypassventil (9), welches in dem Entlüftungsgas-Bypasskanal angeordnet ist und welches die Menge an umgeleitetem Abgas einstellt.
einer Dampferzeugungsvorrichtung (3), welche Dampf durch Wiedergewinnen von Abgaswärme aus dem Abgas erzeugt, welches durch den Kompressor oder durch den Kompressor und den Entlüftungsgas-Bypasskanal geleitet wird;
einer Dampfturbine (5), welche durch den von der Dampferzeugungsvorrichtung erzeugten Dampf betrieben wird; und
einen Generator (7), welcher Elektrizität unter Verwenden einer durch die Dampfturbine erzeugten Antriebskraft erzeugt und welcher die resultierende elektrische Energie an ein System (34) zuführt,
wobei das Verfahren umfasst:
Einstellen des Grades einer Öffnung des Entlüftungsgas-Bypassventils in Abhängigkeit von dem Druck des überhitzten Dampfs, welcher von der Dampferzeugungsvorrichtung an die Dampfturbine zugeführt wird; und
**dadurch gekennzeichnet, dass**
die Steuereinheit (10) das Entlüftungsgas-Bypassventil von einem vollständig geschlossenen Zustand in einen vollständig geöffneten Zustand bringt, wenn der Dieselmotor eine vorbestimmte Last erreicht, und danach den Grad einer Öffnung des Entlüftungsgas-Bypassventils in Abhängigkeit von dem Druck des überhitzten Dampfs einstellt.

## Revendications

1. Equipement de centrale électrique comprenant :
un moteur diesel (1) ;
un surcompresseur (2) qui comprime de l'air de combustion à fournir au moteur diesel lorsque le surcompresseur est entraîné par un gaz d'échappement issu du moteur diesel ;
un chemin de dérivation de gaz soutiré (8) à travers lequel une portion du gaz d'échappement issu du moteur diesel contourne le surcompresseur ;
une soupape de dérivation de gaz soutiré (9) qui est disposée dans le chemin de dérivation de gaz soutiré et qui ajuste la quantité de gaz d'échappement de dérivation ;
un appareil de production de vapeur (3) qui produit de la vapeur en récupérant la chaleur d'échappement issue du gaz d'échappement qui est passée à travers le surcompresseur ou à travers le surcompresseur et le chemin de dérivation de gaz soutiré ;
une turbine à vapeur (5) qui est entraînée par la vapeur produite par l'appareil de production de vapeur ;
un générateur (7) qui génère de l'électricité à l'aide d'une force d'entraînement produite par la turbine à vapeur et qui fournit la puissance électrique résultante à un système (34) ; et
un régulateur (10) qui ajuste le degré d'ouverture de la soupape de dérivation de gaz soutiré en fonction de la pression de la vapeur surchauffée fournie de l'appareil de production de vapeur à la turbine à vapeur ;
et **caractérisé en ce que** :
le régulateur amène la soupape de dérivation de gaz soutiré d'un état pleinement fermé à un état pleinement ouvert lorsque le moteur diesel atteint une charge prédéterminée, et ensuite ajuste le degré d'ouverture de la soupape de dérivation de gaz soutiré en fonction de la pression de la vapeur surchauffée.

2. Equipement de centrale électrique selon la revendication 1, dans lequel le régulateur ajuste le degré d'ouverture de la soupape de dérivation de gaz soutiré vers une position fermée lorsque la pression de la vapeur surchauffée tend à augmenter d'un premier niveau prédéterminé et ajuste le degré d'ouverture de la soupape de dérivation de gaz soutiré vers une position ouverte lorsque la pression de la vapeur surchauffée tend à diminuer depuis un deuxième niveau prédéterminé.

3. Equipement de centrale électrique selon la revendication 1 ou la revendication 2, dans lequel le régulateur ouvre une soupape de décharge de vapeur (30) pour permettre à la vapeur surchauffée de contourner la turbine à vapeur dans un condenseur (22) lorsque la soupape de dérivation de gaz soutiré est pleinement fermée et que la pression de la vapeur surchauffée excède un troisième niveau prédéterminé.

4. Equipement de centrale électrique selon l'une des revendications 1 à 3, dans lequel :
le moteur diesel est un moteur diesel principal qui entraîne une hélice (11) permettant de propulser un navire ; et
le générateur fournit la puissance électrique à un système embarqué.

5. Navire comprenant l'équipement de centrale électrique selon la revendication 4.

6. Procédé d'exploitation d'un équipement de centrale électrique pourvu ;
d'un moteur diesel (1) ;
d'un surcompresseur (2) qui comprime de l'air de combustion à fournir au moteur diesel lorsque le surcompresseur est entraîné par un gaz d'échappement issu du moteur diesel ;
d'un chemin de dérivation de gaz soutiré (8) à travers lequel une portion du gaz d'échappement issu du moteur diesel contourne le surcompresseur ;
d'une soupape de dérivation de gaz soutiré (9) qui est disposée dans le chemin de dérivation de gaz soutiré et qui ajuste la quantité de gaz d'échappement de dérivation ;
d'un appareil de production de vapeur (3) qui produit de la vapeur en récupérant la chaleur d'échappement issue du gaz d'échappement qui est passée à travers le surcompresseur ou à travers le surcompresseur et le chemin de dérivation de gaz soutiré ;
d'une turbine à vapeur (5) qui est entraînée par la vapeur produite par l'appareil de production de vapeur ; et
d'un générateur (7) qui génère de l'électricité à l'aide d'une force d'entraînement produite par la turbine à vapeur et qui fournit la puissance électrique résultante à un système (34),
le procédé comprenant :
l'ajustement du degré d'ouverture de la soupape de dérivation de gaz soutiré en fonction de la pression de la vapeur surchauffée fournie de l'appareil de production de vapeur à la turbine à vapeur ; et
**caractérisé en ce que** :
le régulateur (10) amène la soupape de dérivation de gaz soutiré d'un état pleinement fermé à un état pleinement ouvert lorsque le moteur diesel atteint une charge prédéterminée et ajuste ensuite le degré d'ouverture de la soupape de dérivation de gaz soutiré en fonction de la pression de la vapeur surchauffée.
